(19) Europäisches Patentamt
European Patent Office
Office européen des brevets

(11) **EP 2 067 656 B1**

(12) **EUROPÄISCHE PATENTSCHRIFT**

(45) Veröffentlichungstag und Bekanntmachung des Hinweises auf die Patenterteilung:
**19.08.2015 Patentblatt 2015/34**

(51) Int Cl.:
***B60N 2/50*** (2006.01)

(21) Anmeldenummer: **08170546.9**

(22) Anmeldetag: **03.12.2008**

(54) **Vorrichtung und Verfahren zur aktiven Federung eines Fahrzeugsteiles**

Device and method for actively springing part of a vehicle

Dispositif et procédé destinés à la suspension active d'un élément de véhicule

(84) Benannte Vertragsstaaten:
**DE FR IT**

(30) Priorität: **04.12.2007 DE 102007058652**
**21.12.2007 DE 102007062927**
**21.11.2008 DE 102008058409**

(43) Veröffentlichungstag der Anmeldung:
**10.06.2009 Patentblatt 2009/24**

(73) Patentinhaber: **GRAMMER AG**
**92224 Amberg (DE)**

(72) Erfinder:
• **Wurmthaler, Prof. Christoph**
**91090, Effeltrich (DE)**
• **Kühnlein, Dr. Alexander**
**91723, Dittenheim (DE)**
• **Haller, Erwin**
**92262, Birgland (DE)**
• **Kolb, Jens**
**92281, Königstein (DE)**

(74) Vertreter: **Hannke, Christian**
**Hannke Bittner & Partner**
**Patent- und Rechtsanwälte**
**Prüfeninger Strasse 1**
**93049 Regensburg (DE)**

(56) Entgegenhaltungen:
EP-A2- 1 577 156      GB-A- 2 313 214
JP-A- 9 109 757      US-A1- 2004 024 503
US-A1- 2004 089 488

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Federung eines Fahrzeugteiles in einem Fahrzeug mit einem gegenüber einem ersten Fahrzeugteil schwingend bewegbaren zweiten Fahrzeugteil und einer ersten Messeinrichtung zum Messen mindestens eines realen Beschleunigungsmesswertes des ersten Fahrzeugteiles in Bezug auf eine Fahrbahn, bei welchem ein realer Beschleunigungswert des zweiten Fahrzeugteiles unter Ausnutzung mindestens eines zur Verfügung stehenden Federweges mit Hilfe mindestens eines zwischen dem ersten Fahrzeugteil und dem zweiten Fahrzeugteil angeordneten Stellglieds reduziert wird sowie ein Fahrzeug mit einem gegenüber einem ersten Fahrzeugteil schwingend bewegbaren Fahrzeugteil und einer ersten Messeinrichtung zum Messen mindestens eines Beschleunigungsmesswertes des ersten Fahrzeugteiles in Bezug auf eine Fahrbahn.

Häufig hat bei geländegängigen Fahrzeugen, wie Traktoren und Baumaschinen, der Fahrzeugsitz und dessen Bewegung großen Einfluss auf Ermüdung und längerfristig auch auf die Gesundheit des Fahrzeugführers. Um die Belastung des Fahrers zu verringern, hat der Sitz die Aufgabe, die auf den Fahrer wirkende Beschleunigung zu minimieren. Da bei Fahrten abseits befestigter Straßen zudem große Kabinenvertikalbewegungen auftreten können, muss zudem auf die Vermeidung von Endanschlägen in den Federwegen geachtet werden. In diesem Zusammenhang sind unterschiedliche Federungsprinzipien bekannt, die sich in ihrer Komplexität und ihrem Energiebedarf voneinander unterscheiden. Es gibt somit passive, semi-aktive und aktive Federungssysteme.

Bei den passiven Federungssystemen, wie sie häufig für Fahrzeugsitze verwendet werden, sind die Eigenschaften der Federungskomponenten baulich bedingt konstruktiv vorgegeben und können während des Federungsbetriebes nicht verändert werden. Bei semi-aktiven Federungssystemen können dissipative Eigenschaften der Sitzfederung abhängig von der jeweiligen Situation gezielt beeinflusst werden. Entweder kann beispielsweise die Härte eines eingesetzten Dämpfers zwischen dem Fahrzeugsitz und einem Kabinenboden verstellt und/oder eine Steifigkeit eines Federelementes zwischen dem Fahrzeugsitz und dem Kabinenboden angepasst werden. Bei aktiven Federungssystemen hingegen wird versucht, durch Energiezufuhr in das Federungssystem eine Beeinflussung des Federungssystemes aktiv zu gestalten.

Häufig ergibt sich das Problem, dass eine Schwingungsreaktion des Fahrzeugsitzes sowohl einer von unten einwirkenden Straßenschwingungsanregung als auch einer von dem Fahrer einwirkenden Belastungswechselschwingungsanregung gerecht werden muss. Beispielsweise beaufschlagt der Fahrer den Fahrersitz mit einer anderen Anregung, wenn er den Kontakt zu dem Fußpedal zur Betätigung des Fahrzeuges sucht, während eine Schwingungsanregung aufgrund unebener Straßengegebenheiten von unten einwirkt. Somit müssen mindestens zwei verschiedene Schwingungsanregungen, welche auf einen Fahrzeugsitz einwirken, berücksichtigt werden, wenn ein hoher Sitzkomfort für einen Fahrer sichergestellt werden soll, ohne dass beispielsweise Endanschläge von Federungswegen des Fahrzeugsitzes erreicht werden. Eine hierfür erforderliche aktive Schwingungsisolation soll nicht nur eine maximal mögliche Fahrerschonung aufgrund der Schwingungseinwirkungen und der sich daraus ergebenen Beschleunigungswerte für den Fahrersitz, sondern auch das dazu konkurrierende Ziel einer beschränkten Auslenkung des Fahrersitzes sicherstellen.

Ein Beispiel für eine gattungsgemäße ist aus US 2004/089488 A1 bekannt. Es ein Sitzfederungssystem zum Abstützen eines Sitzes an einem Fahrzeugboden offenbart, welches einen Aktor zum Bewegen des Sitzes relativ zu dem Fahrzeugboden umfasst. Darüber hinaus weist das Sitzfederungssystem einen fahrzeugbodenseitigen Beschleunigungsmesser zum Erzeugen eines Beschleunigungssignals in Abhängigkeit einer Vertikalbewegung der Fahrzeugbodens. Des Weiteren zeichnet sich das Sitzfederungssystem durch eine Kontrolleinheit aus, welche das Beschleunigungssignal in ein Kontrollsignal umwandelt, wobei der Aktor in Abhängigkeit des Kontrollsignals aktiviert wird.

Aus der EP 1 577 156 A2 ist ein Fahrzeugsitz für ein Nutzfahrzeug mit einer ein Sitzkissen umfassenden Sitzstruktur und mit einem fahrzeugfesten Sitzunterbau eines Fahrzeugs bekannt. Die Sitzstruktur ist an dem Sitzunterbau mittels einer Stützvorrichtung beweglich gelagert. Die Stützstruktur weist eine Regelvorrichtung mit Sensoren zum Regeln eines Übertragungsverhaltens der Stützvorrichtung auf, wobei die Stützvorrichtung einen ersten Sensor zur Aufnahme der Fahrzeugbeschleunigung, einen sitzstrukturfest angeordneten zweiten Sensor zur Aufnahme einer Sitzstrukturbeschleunigung und einen dritten Sensor zur Aufnahme der Relativbewegung zwischen der Sitzstruktur und dem Fahrzeug aufweist. Die Signale dieser Sensoren dienen als Messgröße für die Regelvorrichtung, so dass letztere anhand der Messgrößen eine Stellgröße für einen Aktor zum Regeln des Übertragungsverhaltens der Stützvorrichtung ermittelt.

Aus der GB 2 313 214 A ist ein aktives Aufhängungssystem zur Begrenzung der Bewegungen eines Fahrzeugsitzes in zwei oder mehr Richtungen relativ zur Bewegung eines Fahrzeugs bekannt, welches eine Anzahl von Sitzstellelementen aufweist, die operativ mit dem Fahrzeugsitz verbunden sind, um den Sitz in zwei oder mehr Richtungen relativ zum Fahrzeug zu bewegen. Daneben sind Sensoren zum Überwachen der Bewegung des Fahrzeugs und der Sitzstellelemente und ein Steuersystem zum Lenken der Bewegung der Sitzstellelemente als Reaktion auf Feedback seitens der Sensoren vorgesehen, wodurch die Sitzbewegung relativ zum Erdboden als Reaktion auf Fahrzeugbewegungen begrenzt wird.

Aus der JP 9 109757 A ist ein weiteres aktives Sitzfederungssystem bekannt, bei welchem eine Vertikalbewegung einer Fahrzeugkarosserie mittels eines daran befestigten Sensors detektiert wird. Anhand der detektierten Vertikalbewegung und anderen Messwerten, wird das aktive Sitzfederungssystem gesteuert.

Des Weiteren wird in der US 2004/024503 A1 ein aktives Federungssystem beschrieben, mittels welchem eine Bewegung eines Passagiersitzes eines Bootes mit Hilfe von mit Sensoren detektierten Bewegungsdaten des Bootes kontrolliert werden soll.

Die der Erfindung zugrunde liegende objektive technische Aufgabe besteht nun darin, das Federungsverhalten zwischen zwei Fahrzeugteilen aktiv mithilfe schnellerer Reaktionszeiten zu verbessern, so dass entsprechende Steuerungs- und Regelungseinheiten wesentlich schneller insbesondere auf äußere Störeinflüsse reagieren können.

Diese Aufgabe wird verfahrensseitig gemäß den Merkmalen des Patentanspruches 1 und vorrichtungsseitig gemäß den Merkmalen des Patentanspruches 5 gelöst.

Kerngedanke der Erfindung ist ein Verfahren zur Federung eines Fahrzeugteiles in einem Fahrzeug mit einem gegenüber einem ersten Fahrzeugteil schwingend bewegbaren zweiten Fahrzeugteil und einer ersten Messeinrichtung zum Messen mindestens eines realen Beschleunigungsmesswertes des ersten Fahrzeugteiles in Bezug auf eine Fahrbahn, bei welchem ein realer Beschleunigungswert des zweiten Fahrzeugteiles unter Ausnutzung mindestens eines zur Verfügung stehenden Federweges mit Hilfe mindestens eines zwischen dem ersten Fahrzeugteil und dem zweiten Fahrzeugteil angeordneten Stellglieds reduziert wird, wobei ein optimaler Beschleunigungswert des zweiten Fahrzeugteiles aus dem realen Beschleunigungsmesswert des ersten Fahrzeugteiles ermittelt wird, und bei welchem anschließend mit Steuerungs- und Regelungseinheiten des Stellglieds eine Abweichung eines realen Beschleunigungswertes des zweiten Fahrzeugteiles vom optimalen Beschleunigungswert des zweiten Fahrzeugteiles unter Ausnutzung des mindestens einen zur Verfügung stehenden Federweges minimiert wird, wobei die Berechnungseinrichtung eine Idealtrajektorie für das Federschwingungsverhalten des zweiten Fahrzeugteiles zur Herbeiführung einer Minimierung seines realen Beschleunigungswertes bestimmt, wobei in der Berechnungseinrichtung aus dem optimalen Beschleunigungswert $\ddot{z}_{Ssoll}$ des zweiten Fahrzeugteiles eine optimale Auslenkung $z_{A\,Soll}$ und die optimale Geschwindigkeit $\dot{z}_{Asoll}$ des zweiten Fahrzeugteiles gegenüber der Fahrbahn ermittelt wird und als Steuerungskraftsignal mittels der Steuerungseinheit dem Stellglied zugeleitet wird, und wobei der reale Beschleunigungswert dem idealen Beschleunigungswert, welcher der Idealtrajektorie folgt, nachgeregelt wird.

Ein weiterer Kerngedanke der Erfindung ist ein Fahrzeug zum Durchführen des erfindungsgemäßen Verfahrens mit einem gegenüber einem ersten Fahrzeugteil schwingend bewegbaren zweiten Fahrzeugteil und einer ersten Messeinrichtung zum Messen mindestens eines realen Beschleunigungsmesswertes des ersten Fahrzeugteiles in Bezug auf eine Fahrbahn und mit einem zwischen dem ersten Fahrzeugteil und dem zweiten Fahrzeugteil angeordneten Stellglied. Dabei zeichnet sich das Fahrzeug aus durch eine Berechnungseinrichtung zum Bestimmen eines zum Zeitpunkt des Vorliegens des realen Beschleunigungsmesswertes des ersten Fahrzeugteils anzuwendenden optimalen Beschleunigungswertes des zweiten Fahrzeugteiles, wobei das Stellglied Steuerungs- und Regelungseinheiten zum Minimieren einer Abweichung eines realen Beschleunigungswertes des zweiten Fahrzeugteiles vom optimalen Beschleunigungswert des zweiten Fahrzeugteiles unter Ausnutzung mindestens eines zur Verfügung stehenden Federweges aufweist, wobei die Berechnungseinrichtung zum Bestimmen einer Idealtrajektorie für das Federschwingungsverhalten des zweiten Fahrzeugteiles zur Herbeiführung einer Minimierung seines realen Beschleunigungswertes geeignet ist, wobei in der Berechnungseinrichtung aus dem optimalen Beschleunigungswert $\ddot{z}_{Ssoll}$ des zweiten Fahrzeugteiles eine optimale Auslenkung $z_{Asoll}$ und die optimale Geschwindigkeit $\dot{z}_{Asoll}$ des zweiten Fahrzeugteiles gegenüber dem ersten Fahrzeugteil ermittelbar ist und als Steuerungskraftsignal mittels der Steuerungseinheit dem Stellglied zuleitbar ist, und wobei der reale Beschleunigungswert dem idealen Beschleunigungswert, welcher der Idealtrajektorie folgt, nachregelbar ist.

Bei einer derartigen aktiven Federung eines Fahrzeuges mit mindestens einem ersten und einem zweiten Fahrzeugteil und dem dazugehörigen Verfahren zur aktiven Federung ist es möglich, dass trotz einer Federschwingung des ersten Fahrzeugteiles, welches beispielsweise eine Fahrzeugkabine eines Traktors sein kann, das zweite Fahrzeugteil, welches beispielsweise ein Fahrzeugsitz sein kann, optimal gefedert wird im Hinblick auf eine fahrerschonende Schwingung, wobei hier der SEAT-Wert (Seat Effective Amplitude Transmissibility) möglichst gering gehalten wird. Der SEAT-Wert ist der Quotient aus einem Effektiv-Wert des Beschleunigungswertes des Fahrzeugsitzes und dem Effektivwert des Beschleunigungswertes der Kabine. Da die Wirkung der auf den menschlichen Körper wirkenden Schwingungen frequenzabhängig ist, werden die Beschleunigungswerte vor Bildung des Effektivwertes mit einem Bewertungsfilter gewichtet. Es soll somit die auf den Fahrer beziehungsweise die den Sitz benutzenden Person wirkende Beschleunigung möglichst gering sein, um ein hohes Maß an Fahrer- beziehungsweise Personenschonung zu erhalten.

Gleichzeitig besteht eine beschränkte Auslenkung $z_A = z_S - z_K$ des Fahrzeugsitzes gegenüber der Fahrbahn, wobei $z_S$ die vertikale Absolutposition des Sitzes und $z_K$ die vertikale Absolutposition des Kabinenbodens bei einer eingeleiteten Schwingung darstellen. Bei einer derartig beschränkten Auslenkung muss zugleich die Bedienbarkeit des Fahrzeuges sichergestellt werden, also beispielsweise der Kontakt des Fußes des Fahrers mit dem Gaspedal durchgehend zur Verfügung stehen. Zugleich soll ein Kontakt mit den Endanschlägen der Federungsvorrichtungen, wie beispielsweise eine Luftfeder zusammen mit einem Dämpfer, bei der Auf- und Abwärtsbewegung des Fahrzeugsitzes vermieden werden.

Das erfindungsgemäße Federungsverfahren und ein Fahrzeug mit einer entsprechenden Federung zeichnet sich dadurch aus, dass eine Federungsregelung eines aktiven Fahrersitzes zur Verfügung gestellt wird, welcher auf einem Modell zur Generierung einer Idealtrajektorie für das Verhalten des Sitzes aus gemessener Beschleunigung des Kabinenbodens beruht. Diesem Idealverhalten wird das tatsächliche Sitzverhalten mittels Vorsteuerung und Trajektorienfolgeregelung nachgeführt. Es findet somit eine Steuerung des Fahrzeugsitzes entlang der von einem Idealmodell Trajektorie statt, wobei ein optimaler Auslenkungswert $z_{Asoll}$ vorgegeben wird. Dies ermöglicht einen schnellen Auslenkungs- bzw. Positionsregelkreis bzw. eine Trajektorienfolgeregelung.

Erfindungsgemäß wird in der Berechnungseinrichtung aus dem optimalen Beschleunigungswert $\ddot{z}_{Soll}$ des zweiten Fahrzeugteiles die optimale Auslenkung $z_{Asoll}$ und die optimale Geschwindigkeit $\dot{z}_{Asoll}$ des zweiten Fahrzeugteiles bzw. des Fahrzeugsitzes gegenüber der Fahrbahn ermittelt und als Steuerungskraftsignal mittels der Steuerungseinheit dem Stellglied zugeleitet.

Ebenso wird mittels einer Regelungseinheit, die zwischen der Berechnungseinheit und dem Stellglied angeordnet ist, eine reale Auslenkung $z_A$ der optimalen Auslenkung $z_{Asoll}$ des zweiten Fahrzeugteiles durch Ausgabe eines Regelungskraftsignales an das Stellglied angeglichen.

Die Summe einer Regelungskraft der Regelungseinheit und einer Steuerungskraft der Steuerungseinheit ergibt eine aufzuwendende Sollkraft des Stellgliedes, welche auf das Stellglied zur Einstellung der optimalen Auslenkung wirken soll.

Das erste Fahrzeugteil kann beispielsweise ein Fahrzeugkabinenboden und das zweite Fahrzeugteil beispielsweise der Fahrzeugsitz bzw. ein Fahrzeugsitzteil, wie die Oberseite eines Scherenarmes, oder zweier Scherenarme, die zwischen dem Fahrzeugsitz und dem Fahrzeugkabinenboden angeordnet sind, darstellen. Ebenso können andere Fahrzeugteile eines Fahrzeuges als erstes und zweites Fahrzeugteil, wie beispielsweise im Fahrwerkbereich, verwendet werden.

Die Berechnungseinrichtung ist zum Bestimmen einer Idealtrajektorie für das Federungs- und Schwingungsverhalten des zweiten Fahrzeugteiles zur Herbeiführung einer Minimierung seines realen Beschleunigungswertes geeignet. Das von der Berechnungseinrichtung angewendete Idealmodell zur Berechnung der optimalen Beschleunigungswerte, der optimalen Auslenkungen und der optimalen Geschwindigkeit in Abhängigkeit von den eingeleiteten Schwingungen, wie sie beispielsweise über die Fahrzeugkabine von unten von der Fahrbahn aus kommend auf einen Fahrzeugsitz wirken, ermittelt jedoch die Kraft zwischen Sitzoberteil und Sitz nicht durch reale Feder- und Dämpferelemente, sondern frei in Abhängigkeit der Zustandsgrößen der Auslenkung bzw. Ausfederung $z_{Asoll}$ und der Auslenkungsgeschwindigkeit bzw. Ausfederungsgeschwindigkeit $\dot{z}_{Asoll}$. Um direkt die sich ergebende Sitzbeschleunigung ablesen zu können, wird zudem eine Masse, die die Person, welche den Sitz benutzt und gegebenenfalls das Sitzeigengewicht beinhaltet, $m_0$ auf 1 normiert.

Es soll also in einem einfachen mathematischen Modell für das System Fahrzeugsitz mit Person bzw. Fahrer neben einer Masse der Person und des Sitzpolsters noch die mechanische Kopplung im Scherengestell des Sitzes durch Feder- und Dämpferelemente sowie das aktive Kraftstellglied bei der Modellierung eines Idealmodells berücksichtigt werden. Die zu der gemessenen Kabinenbeschleunigung $\ddot{z}_K$, welche von einer Federungsschwingungseinleitung durch eine unebene Fahrbahn herrühren kann, zugehörige Sitzbeschleunigung $\ddot{z}_S$ soll so bestimmt werden, dass die Qualitätskriterien einer Sitzfederung optimal erfüllt werden. Ist der Verlauf der optimalen Sitzbeschleunigung $\ddot{z}_{Ssoll}$ und somit auch die optimale Auslenkung $z_{Asoll}$ sowie deren Ableitung $\dot{z}_{Asoll}$ bekannt, kann unter Kenntnis des Verhaltens der passiven Elemente des Sitzes, wie beispielsweise des Scherengestelles mit der Kraft

$$F_{Schere} = f(\ddot{z}_A, z_A)$$

die durch das aktive Stellglied zu erzeugende Kraft

$$F_{Steuer} = m\,\ddot{z}_{Soll} + f(\ddot{z}_{SSoll}, z_{Asoll})$$

ermittelt werden. Neben dieser Steuerung ist aufgrund von Modellunsicherheiten und zur Kompensation der durch den Fahrer zum Beispiel bei Pedalbetätigung ausgeübten Kräfte $F_{Faher}$ ein Folgeregler erforderlich, der die reale Sitzauslenkung $z_A$ und ihren Sollwert $z_{Asoll}$ durch einen weiteren Kraftanteil $F_{regler}$ nachführt. Somit ergibt sich als Sollkraft des Stellgliedes

$$F_{Soll} = F_{Steuer} + F_{regler}.$$

Ein wesentlicher Vorteil dieses aktiven Reglungskonzeptes wird darin sichtbar, dass da die Sitzauslenkung stets der zur idealen Beschleunigung gehörenden Sollposition nachgeregelt wird, der Folgeregler sehr schnell ausgelegt und somit zum Beispiel die Ausweichbewegung bei Pedalbetätigung sehr klein gehalten werden kann. Der Fahrer hat also das Gefühl, sehr definiert zu sitzen, ohne dass dies eine schlechtere Schwingungsisolation und somit großer SEAT-Werte zur Folge hätte.

Bei dem erfindungsgemäßen Verfahren bestimmt die Berechnungseinrichtung eine Idealtrajektorie für das Federschwingungsverhalten des zweiten Fahrzeugteiles zur Herbeiführung einer Minimierung eines Realbeschleunigungswertes. In der Berechnungseinrichtung wird aus dem optimalen Beschleunigungswert $\ddot{z}_{Ssoll}$ des zweiten Fahrzeugteiles eine optimale Auslenkung $z_{Asoll}$ und die optimale Geschwindigkeit $\dot{z}_{Asoll}$ des zweiten Fahrzeugteiles gegenüber dem ersten Fahrzeugteil ermittelt und als Steuerungskraftsignal mittels der Steuerungseinheit dem Stellglied zugeleitet. Ebenso wird mittels der Regelungseinheit eine reale Auslenkung $z_A$ der optimalen Auslenkung $z_{Asoll}$ des zweiten Fahrzeugteiles durch Ausgabe eines Regelungskraftsignales an das Stellglied angeglichen.

Gemäß einer bevorzugten Ausführungsform wird eine Auslenkung des zweiten Fahrzeugteiles auf einen dem optimalen Beschleunigungswert zugehörigen Sollwert eingeregelt.

Weitere vorteilhafte Ausführungsformen ergeben sich aus den Unteransprüchen.

Vorteile und Zweckmäßigkeiten sind der nachfolgenden Beschreibung in Verbindung mit der Zeichnung zu entnehmen. Hierbei zeigen:

Fig. 1      In einer schematischen Darstellung einen Fahrzeugsitz mit eingezeichneten Parametern zur Darstellung der vorliegenden Erfindung;

Fig. 2      Schaltungsdiagramm für ein Regelungsverfahren für aktive gefederte Sitze mit einer Störgrößenaufschaltung;

Fig. 3      Schaltungsdiagramm für ein Regelungsverfahren mit gewünschter Schwingungsisolation;

Fig. 4      in schematischer Darstellung ein physikalisches Modell eines realen Sitzes;

Fig. 5      in schematischer Darstellung ein physikalisches Modell eines idealen Sitzes;

Fig. 6      in einem Diagramm ein Kennlinienfeld eines Schwingungsverhaltens mit Beschleunigungs-, Geschwindigkeits- und Federwegwerten;

Fig. 7      in einem Diagramm mit PSD-Werten und Frequenzwerten der Beschleunigung von Normsignalen;

Fig. 8      in einem Diagramm SEAT-Werte bzw. Federwege in Abhängigkeit von Anregungssignalen der Schwingungsverläufe;

Fig. 9      eine schematische Darstellung der Berechnungszusammenhänge des Sitzmodelles;

Fig. 10      eine schematische Darstellung des Gesamtaufbaus des erfindungsgemäßen gefederten Fahrzeugsitzes;

Fig. 11      in schematischer Darstellung den Aufbau eines Zustandsreglers;

Fig. 12      ein Diagramm den Reaktionsverlauf des Sitzes auf ein plötzliches Aufstehen des Fahrers hin in Abhängigkeit von der Auslenkung und der Zeit; und

Fig. 13      in einer schematischen Darstellung die Einbaulage eines Hydraulikzylinders als Stellglied.

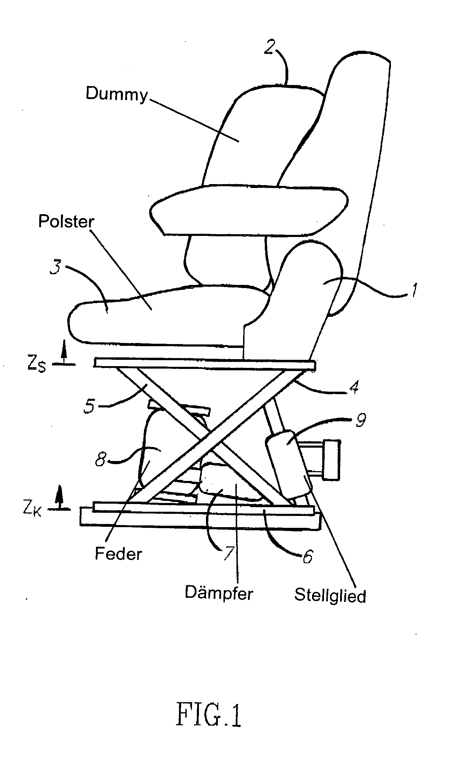

Zunächst soll der Aufbau des zu regelnden Federungssitzes betrachtet werden. Gemäß Fig. 1 wird in einer schematischen Darstellung ein grundsätzlicher Aufbau eines derartigen Fahrzeugsitzes, wie er erfindungsgemäß vorliegen kann dargestellt. Der Fahrzeugsitz 1 besteht aus einem Polster 3, einem darauf angeordneten Dummy, der den Fahrer darstellen soll, einem Untergestell 6 und einem zwischen dem Untergestell und dem Sitzoberteil angeordneten Scherengestell 4, 5. Zusätzlich ist ein Dämpfer 7, eine Luftfeder 8 und erfindungsgemäß ein Stellglied 9 zwischen den Scherenarmen und dem Untergestell oder dem Oberteil und dem Untergestell angeordnet.

Die Variable z steht für die vertikale Raumkoordinate, der Index S für den Scherenoberarm bzw. dem Fahrzeugsitz K, für den Kabinenboden und A für die Ausfederung, womit gilt:

$$z_A = z_S - z_K$$

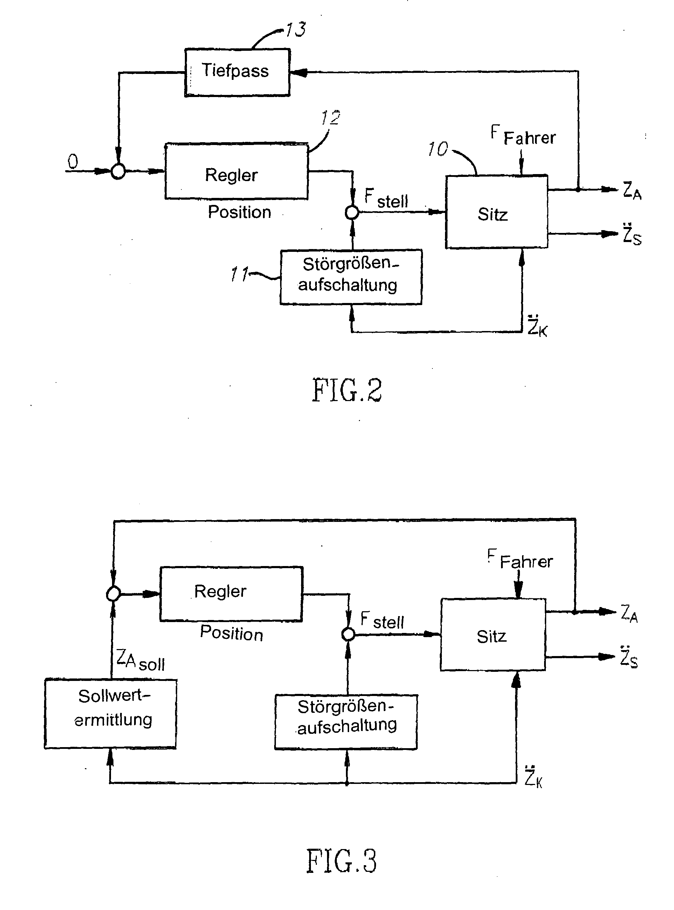

Ausgangspunkt für das neue Regelungsverfahren ist ein Regelungskonzept für aktiv gefederte Sitze bestehend aus einer Störgrößenaufschaltung, die einer Steuerung entspricht, und einer Positionsregelung, wie es in Fig. 2 wiedergegeben ist.

Die Auslegung einer Schwingungsisolation dieses aktiven Sitzsystemes für einen Sitz 10 erfolgt mit Hilfe einer Störgrößenaufschaltung 11. Diese wird im Allgemeinen so dimensioniert, dass sich mittel- und höherfrequente Schwingungsanregungen nicht in der Sitzbeschleunigung $\ddot{z}_S$ niederschlagen. Kabinenbewegungen niederer Frequenz müssen hingegen an den Sitz übertragen werden, da ansonsten der benötigte Federweg zu groß würde. Um den Sitz trotz zusätzlicher Kräfte $F_{Fahrer}$, wie sie zum Beispiel bei Pedalbetätigung entstehen, in seiner Mittenlage zu halten, wird zudem ein Positionsregler mit der Mittellage als Sollwert benötigt. Dies wird mit Bezugszeichen 12 und Bezugszeichen 13 wiedergegeben. Ein grundlegender Nachteil eines derartigen bereits bekannten Regelungskonzeptes ist allerdings, dass dieser Positionsregelkreis relativ langsam ausgeführt werden muss, um nicht die durch die Steuerung erreichte Schwingungsisolation zu beinträchtigen. Dieser Sachverhalt ist durch den im Lagemesskanal enthaltenen Tiefpass angedeutet.

Vorteilhaft möchte man als Sollwert der Sitzposition nicht die Mittellage, sondern die sich bei gewünschter Schwingungsisolation ergebende Ausfederung verwenden. Ein derartiges in Fig. 3 wiedergegebenes Regelungssystem bzw. Konzept wird nachfolgend näher beschrieben, wobei Sollwertermittlung und Störgrößenaufschaltung nicht, wie skizziert, unabhängig voneinander sind, sondern auf einer gemeinsamen Grundlage entworfen werden.

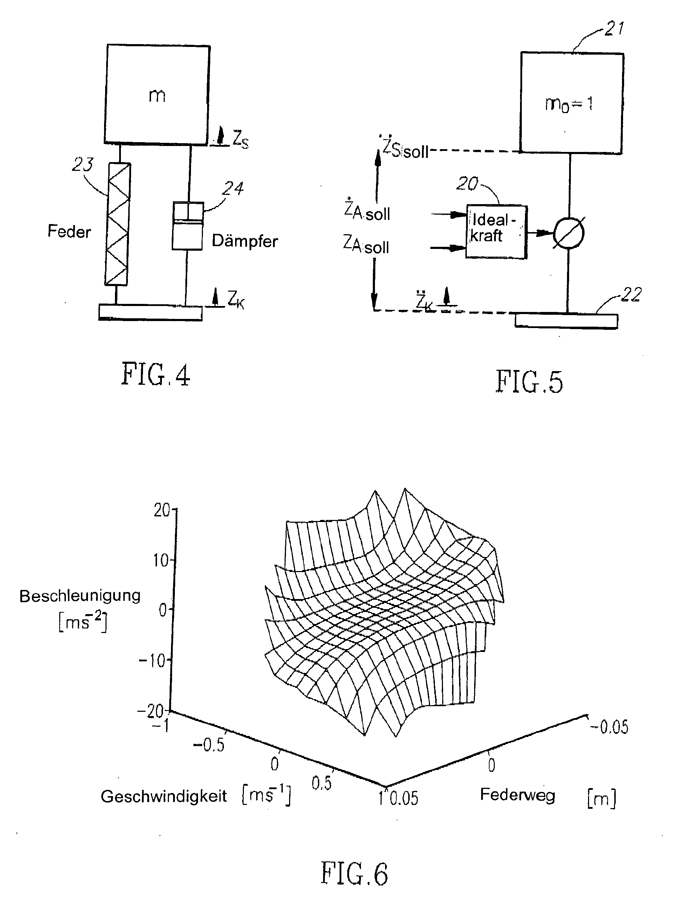

Um den Verlauf des Auslenkungs- bzw. Ausfederungssollwertes zu ermitteln, wird ein Modell eines idealen Sitzes verwendet, wie es in Fig. 5 schematisch dargestellt ist. Dieses orientiert sich an dem physikalischen Modell eines realen Sitzes, wie es schematisch in Fig. 4 dargestellt ist. Bei dem Ideal modell gemäß Fig. 5 wird allerdings die Kraft 20 zwischen einem Sitzoberteil 21 und dem Anteil einer Kabine 22 nicht durch reale Feder- und Dämpferelemente 23, 24 hervorgerufen, sondern frei in Abhängigkeit der Zustandsgrößen der Ausfederung $z_{ASoll}$ und der Ausfederungsgeschwindigkeit $\dot{z}_{ASoll}$ eingeprägt. Um direkt die sich ergebende Sitzbeschleunigung ablesen zu können, wird zudem die Masse $m_0$ auf 1 normiert.

Als Funktion $f_{opt}$ zur Berechnung der vorgebbaren Idealkraft bzw. Sitzbeschleunigung $\ddot{z}_{Ssoll}$ wird zunächst ein mehrdimensionales Polynom

$$\ddot{z}_{Ssoll} = f_{opt}(z_{Asoll}, \ddot{z}_{Ssoll}) = \sum_{j=1}^{N}\sum_{i=0}^{j} k_{i,j} z_{Asoll}{}^{i} \ddot{z}_{Ssoll}{}^{(j-i)} \qquad (1)$$

angesetzt. Eine anschließende numerische Optimierung liefert die Koeffizienten $k_{i,j}$ dieses Polynoms. Die Zahl der zu bestimmenden Koeffizienten lässt sich deutlich verringern, wenn gefordert wird, dass der Sitz auf Anregungen in positiver und negativer Richtung spiegelbildlich reagieren soll. Dann gilt für die Koeffizienten

$$k_{i,j} = 0, \; j \in \{2,4,6,\dots\}. \qquad (2)$$

Aus einer derartigen Optimierung soll ein möglichst kleiner SEAT-Wert des Idealmodelles bei einer typischen Anregung entstehen. Um Endanschläge der Luftfeder während der Auslenkbewegung zu vermeiden, wird als Nebenbedingung der Optimierung gefordert, dass ein maximaler Federweg, wie beispielsweise 95 mm selbst bei der extremsten zu erwartenden Anregung nicht überschritten werden darf.

Zur Anregung wird sowohl ein typischer Fall als auch ein Extremfall einer Kabinenbewegung betrachtet, deren spektrale Leistungsdichte dem $(1,8)^2$-fachen des Normsignales EM3 aus ISO 7096 entspricht und die binnen einer Sekunde eine maximale Positionsänderung von 170 mm aufweist. Fig. 6 zeigt das Kennlinienfeld der sich ergebenen optimierten nicht linearen Funktion, wobei über die Ordinate die Beschleunigung und über die x- und y-Abszissen die Geschwindigkeit und der Federweg aufgetragen sind.

Gemäß dem Kennlinienfeld der optimierten Sitzbeschleunigung nach Fig. 6 ist erkennbar, dass bei kleiner Auslenkung und geringer Relativgeschwindigkeit nur sehr kleine Beschleunigungen an den Fahrer übertragen werden. Nur bei großen Relativgeschwindigkeiten insbesondere in der nähe der Endanschläge der Federungselemente und bei Bewegung in Richtung dieser Anschläge wirken auf den Fahrer große Beschleunigungswerte. Man erhält also ein amplitudenselektives Sitzverhalten. Dies kann auch gemäß der Tab.1, wie nachfolgend aufgeführt, entnommen werden.

Tabelle 1

| Anregungssignal | EM3 | | | |
|---|---|---|---|---|
| Amplitudenskalierung | 100% | 130% | 150% | 180% |
| SEAT-Wert | 0,31 | 0,36 | 0,40 | 0,47 |
| Federweg [mm] | 82 | 89 | 92 | 95 |

Aus der Tab. 1 sind SEAT-Werte zu entnehmen mit dazugehörigen Federwegen, wie sie sich mit diesem Idealmodell verschiedene Anregungssignale ergeben. Es werden somit Simulationsergebnisse des idealen Sitzes bei Normanregung EM3 gezeigt.

Hätte der reale Sitz aus Fig. 4 bei gegebener Masse bereits oben dargestelltes Verhalten, so würde sich der reale Sitz bezüglich der Schwingungsisolation ideal verhalten. Dann könnte auf die Störgrößenaufschaltung verzichtet werden, wie sie in Fig. 3 gezeigt wird und der Regler müsste über das Stellglied nur den Einfluss der Fahrerkräfte ausgleichen. Mit passiven Elementen ist es jedoch nahezu unmöglich, das gezeigte Verhalten für Fahrer jeden Gewichtes konstruktiv zu realisieren. Selbst wenn eine rein passive Realisierung dieser Sitzcharakteristiken möglich wäre, sollte sie nicht ohne zusätzliche Positionsregelung umgesetzt werden, da im Bereich um die Ruhelage die Feder sehr weich ist und somit der Sitz dem Fahrer kein definiertes Sitzgefühl bietet. Bei Realisierung mit einem aktiven Sitz ohne passive Elemente ergeben sich dagegen große Anforderungen an die Maximalkraft $F_{max} = m_{max} \ddot{z}_{Ssoll\,max}$ des Stellgliedes. Eine Reduzierung der erforderlichen Aktorkraft kann durch möglichst gute Näherung zwischen Massegewichteter Idealbeschleunigung und Feder-, Dämpferkraft des realen Sitzes erreicht werden, wie aus der nachfolgend hergeleiteten Gleichung 8 zu entnehmen ist.

Für das angestrebte Idealmodell wird als neben einer Masse des Fahrers bzw. der den Sitz benutzenden Person und des Sitzpolsters noch die mechanische Kopplung im Scherengestell des Sitzes durch Feder- und Dämpferelement sowie das aktive Kraftstellglied bei der Aufstellung des Idealmodells berücksichtigt. Dies wird eingehender nachfolgend betrachtet. Es soll hiermit zu einer gemessenen Kabinenbeschleunigung $\ddot{z}_K$ die Sitzbeschleunigung $\ddot{z}_S$ so bestimmt werden, dass die Qualitätskriterien, wie beispielsweise das Nichterreichen der Endanschläge der Federungselemente, optimal erfüllt werden. Dies übernimmt das Idealmodell.

Da, wie erläutert, zur Realisierung eines Idealen Sitzes stets ein aktives Stellglied benötigt wird, kann auf die Einschränkung, dass die Idealkraft nur von Relativgrößen abhängen darf, verzichtet werden. Eine Erweiterung um einen Einfluss der Kabinenbeschleunigung

$$\ddot{z}_{Ssoll} = \bar{f}\left(z_{Asoll}, \dot{z}_{Asoll}, \ddot{z}_K\right) \tag{3}$$

ist naheliegend, da die optimale Sitzbewegung sicher auch mit der Anregung zusammenhängt. Zur Optimierung wird die Funktion $\bar{f}_{opt}$ in zwei Teile aufgespalten, einen Anteil $\bar{f}_{optR}$ zur Rückführung der Relativgrößen und einen Anteil $f_{IA}$ zur Aufschaltung der Anregung abhängig von den Relativgrößen und der Anregungsrichtung:

$$\bar{f}_{opt}\left(z_{Asoll}, \dot{z}_{Asoll}, \ddot{z}_K\right) = \bar{f}_{optR}\left(z_{Asoll}, \dot{z}_{Asoll}\right) + \bar{f}_{optA}\left(z_{Asoll}, \dot{z}_{Asoll}, sign(\ddot{z}_K)\right)\ddot{z}_K . \tag{4}$$

Die Funktionen $\bar{f}_{otpR}$ und $\bar{f}_{optA}$ werden ebenfalls als mehrdimensionale Polynome angesetzt und ihre Koeffizienten, wie beschrieben numerisch optimiert.

Neben dem bereits erwähnten Optimierungsziel, nämlich der Verringerung des SEAT-Wertes bei Einhaltung des verfügbaren Federweges, können bei der Optimierung in Form einer Gütevektoroptimierung noch weitere wünschenswerte Eigenschaften berücksichtigt werden.

Es empfindet der Fahrer beispielsweise als störend, wenn beim typischen Betrieb des belegten Sitzes häufig große Relativauslenkungen auftreten. Da hierfür kein objektives Gütemaß bekannt ist, wird aus den sich bei Anregung mit dem Normsignal ergebenen Ausfederungsverlauf der mittlere Betrag der Auslenkung berechnet und als Gütekriterium verwendet.

Zudem ist es wichtig, dass der Sitz nach Ende der Anregung aus einem ausgelenkten Zustand $z_{A0}$ in angemessener Zeit zur Ruhelage zurückkehrt. Hier kommt als Gütekriterium die zeitgewichtete quadratische Regelfläche zum Einsatz, um die Rückkehr in die Ruhelage zu sichern.

Das unter Einbeziehung obiger Zusatzbedingungen und bei Verwendung derselben Anregungssignale optimierte Idealmodell ist dem einfachen Modell eines optimalen Sitzes in den wesentlichen Aspekten überlegen. Dies kann aus den in Tabelle 2 aufgeführten SEAT-Werten und Federwegen des erweiterten und des einfachen Idealmodells entnommen werden. Im Folgenden wird daher nur das erweiterte Idealmodell betrachtet und kurz als Idealmodell bezeichnet.

Tabelle 2

| Anregungssignal | EM3 | | | | | | | |
|---|---|---|---|---|---|---|---|---|
| Idealmodell | erweitert | | | | Einfach | | | |
| Amplitudenskalierung | 100% | 130% | 150% | 180% | 100% | 130% | 150% | 180% |
| SEAT-Wert | 0,28 | 0,30 | 0,32 | 0,37 | 0,31 | 0,36 | 0,40 | 0,47 |
| Federweg [mm] | 83 | 88 | 90 | 95 | 82 | 89 | 92 | 95 |

Tab. 2 zeigt Simulationsergebnisse des einfachen und des erweiterten Idealmodelles, wie oben beschrieben.

Aufgrund der Tatsache, dass die Optimierung anhand konkreter Anregungssignale erfolgt, minimiert die so ermittelte Optimalfunktion $\overline{f}_{opt}$ nur für ein bestimmtes Anregungssignal das Gütefunktional. Weicht das Anregungsspektrum eines Fahrzeuges von dem zu dem Entwurf verwendeten Signal ab, so ist das Idealmodell nicht mehr optimal. Deshalb kann es sinnvoll sein, für jede Fahrzeugklasse und Anregungsart ein angepasstes Idealmodell zu entwerfen.

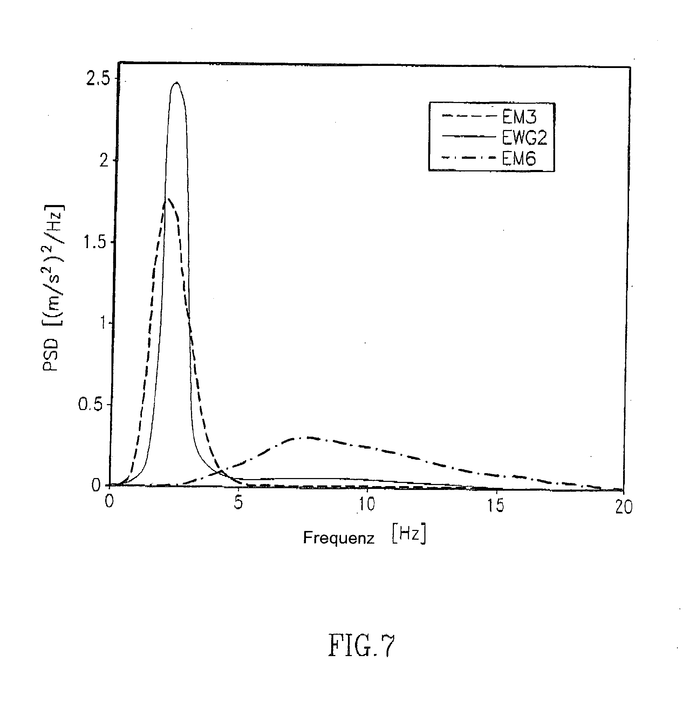

Das Verbesserungspotenzial, welches durch diese angepassten Idealmodelle möglich ist, soll genauer betrachtet werden. Hierzu werden aus der Vielzahl bekannter Normanregungssignale zwei weitere ausgewählt, die sich untereinander und zum bereits verwendeten skalierten EM3-Signal hinsichtlich Beschleunigungsspektrum und maximalem Anregungsweg $z_{Kmax}$ möglichst deutlich unterscheiden. Die Leistungsdichtespektren der Beschleunigung dieser Normsignale zeigt Fig. 7, in welchem in einem Diagramm über die Ordinate die PSD-Werte und über eine Abszisse die Frequenz-Werte aufgezeigt sind.

Dem Diagramm gemäß Fig. 7 ist zu entnehmen, dass bei Verwendung des Normsignales EM3 relativ niederfrequente Anteile oder bei Skalierung 180% große Anregungswege, nämlich beispielsweise $z_{Kmax}$ = 182 mm, aufweist, während das Signal EM6 nur sehr kleine Wege, nämlich $z_{Kmax}$ = 12 mm bei hohen Frequenzen aufweist. Das Anregungssignal EWG2 für Zugmaschinen der Kategorie A Klasse II besitzt im Vergleich zu dem EM3-Signal ein wesentlich schmalbandigeres Spektrum bei kleinerem Anregungsweg, nämlich $z_{Kmax}$ = 90 mm. Jedes der beiden zusätzlichen Normsignale wird als typische Anregung zur Auslegung eines weiteren Idealmodells verwendet. Bei der Optimierung wird die Extrem-Anregung EM3 180% weiter zum Test der Endanschlagsvermeidung verwendet.

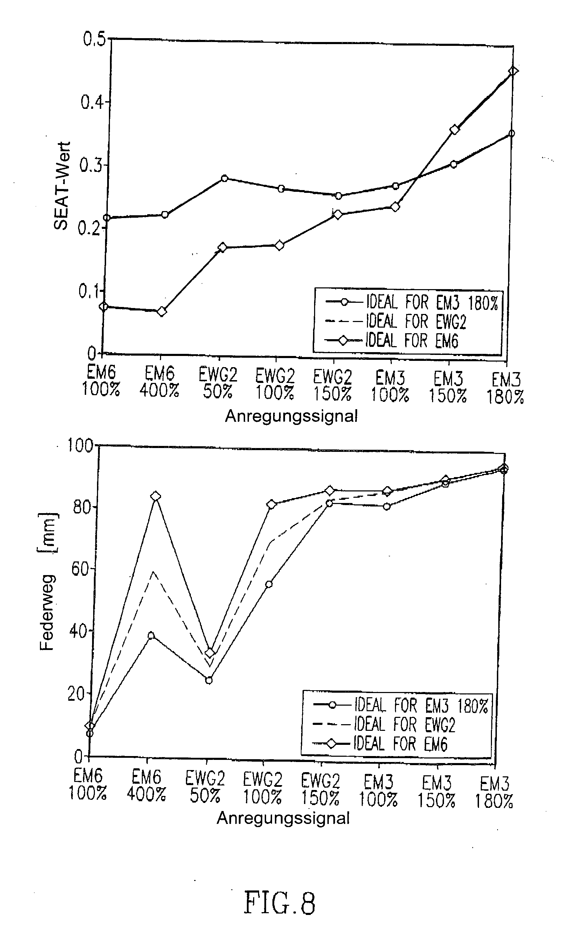

Um das Potenzial der verschiedenen Idealmodelle zu vergleichen, werden jeweils ihre SE-AT-Werte sowie der zugehörige Federweg bei Anregung mit den ausgewählten Normsignalen bei unterschiedlichen Skalierungen ermittelt. Die Ergebnisse hierzu sind der Fig. 8 zu entnehmen. In Fig. 8 sind die SEAT-Werte bzw. die Federwege jeweils über die Ordinate und die verschiedenen Anregungssignale jeweils über die Abszisse aufgetragen. Man erkennt bei Vergleich der in den in Fig. 8 wiedergegebenen Verlaufslinien zu verschiedenen Anregungssignalen, dass das auf das Anregungssignal EM6 ausgelegte Idealmodell auch bei Anregung mit den anderen Prüfsignalen kleiner Amplituden, nämlich EM6 400% und EWG2 50%, im Vergleich gute SEAT-Werte liefert, dies allerdings bei erhöhten Federwegbedarf. Bei hoher Weganregung sinkt seine Isolationswirkung. Das auf EWG2 optimierte Idealmodell weist bei den Testsignalen mittlerer Anregungswege die beste Isolationswirkung bei mittlerem Federwegbedarf auf. Bei starker Anregung lässt aber auch sein Isolationsvermögen nach. Das auf größtmögliche Anregung ausgelegte Idealmodell weist über alle Anregungssignale hinweg den kleinsten Federwegbedarf auf, liefert jedoch nur bei großen Anregungen den besten SEAT-Wert.

Die feste Wahl eines an das Fahrzeug angepasste Idealmodell kann also die Schwingungsisolation verbessern, wobei auch die mit den nicht angepassten Idealmodellen erzielten Isolationswerte diejenigen verfügbarer Seriensitze übersteigt. Zur weiteren Verbesserung wäre aber auch eine automatische Auswahl des geeigneten Idealmodelles abhängig von der durch den Beladungszustand und den Fahrbahntyps hervorgerufenen Anregung denkbar.

Nachdem nun die Beschleunigungswerte an dem Kabinenboden gemessen worden sind und eine Idealbewegung des Fahrersitzes in Form eines Idealmodelles mittels vorgebbarer Parameter, wie der Masse des Fahrers, und des Ausmaßes des Federweges, ermittelt bzw. errechnet worden ist, muss nun zur Minimierung der Fahrersitzbeschleunigung und ohne Erreichen der Endanschläge der Federwege ein aktives Stellglied angesteuert werden, welches eine Kraft in Einfahr- und Ausfahrrichtung ausüben kann.

Hierfür ist sowohl eine Steuerungseinheit als auch eine Regelungseinheit notwendig, um die Federung des Fahrzeugsitzes mittels des Stellgliedes derart zu steuern, dass, wenn sich der Sitz anders als das Idealmodell bewegt, unter Einhaltung der zur Verfügung stehen Federwege eine auf den Fahrer wirkende Beschleunigung mittels des Stellgliedes minimiert.

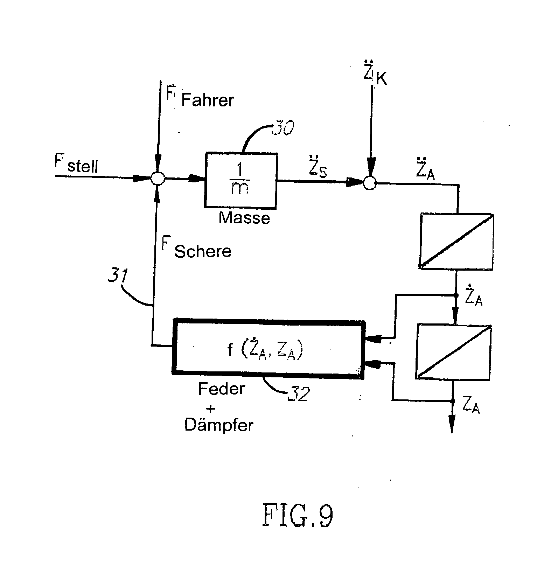

Gemäß dem in Fig. 1 wiedergegebenen Sitzaufbau lässt sich ein Rechnungsmodell des zu regelnden aktiven Fahrersitzes ableiten. Neben einer Masse m mit dem Bezugszeichen 30 gemäß Fig. 9, welche eine schematische Darstellung der Berechnungszusammenhänge des Sitzmodelles wiedergibt, für Fahrer und Sitzpolster wird noch die mechanische Kopplung $F_{Schere}$ mit dem Bezugzeichen 31 im Scherengestell des Sitzes durch nicht als Stellglied verwendete Feder- und Dämpferelemente 32 sowie parasitäre Reibung bei der Modellierung berücksichtigt. Für die Beschleunigung des realen Sitzes erhält man somit als Kraftgleichung

$$m\ddot{z}_S = F_{Stell} + F_{Schere} + F_{Fahrer}.$$ (5)

Die Zusammenhänge bei dieser Berechnung sind in einem Strukturbild gemäß Fig. 9 dargestellt.

Wie bereits erwähnt, hat die Steuerung die Aufgabe für eine gute Schwingungsisolation zu sorgen. Der Verlauf der optimalen Sitzbeschleunigung $\ddot{z}_{Ssoll}$ sowie die optimale Auslenkung $z_{Asoll}$ und deren Ableitung $\dot{z}_{Asoll}$ sind aus dem bereits dargestellten Idealmodell bekannt. Unter Kenntnis des Verhaltens der passiven Elemente des Sitzes kann die bei der optimalen Bewegung durch die Schere erzeugte Kraft $F_{Scheresoll} = f(\dot{z}_{Asoll}, z_{Asoll})$ bestimmt werden. Mit dem Stellsignal

$$F_{Stell} = F_{Steuer} = m\ddot{z}_{Ssoll} - f\left(\dot{z}_{Asoll}, z_{Asoll}\right)$$ (6)

ergibt sich mit Hilfe der Gleichung (5) die tatsächliche Sitzbeschleunigung gemäß

$$m\ddot{z}_S = m\ddot{z}_{Ssoll} - f\left(\dot{z}_{Asoll}, z_{Asoll}\right) + f\left(\dot{z}_A, z_A\right) + F_{Fahrer}.$$ (7)

Übt der Fahrer keine Kraft aus und stimmt der Anfangszustand von Modell und Sitz überein, so wird sich der reale Sitz bei hinreichend genauem Modell so bewegen, wie das zugrundeliegende Idealmodell.

Mit dem einfachen Idealmodell nach Gleichung (1) ergibt sich die Steuerung zu

$$F_{Stell} = F_{Steuer} = mf_{opt}\left(\dot{z}_{Asoll}, z_{Asoll}\right) + f\left(\dot{z}_A, z_A\right).$$ (8)

Hierbei ist zu erkennen, dass die Steuerung überflüssig wird, wenn die Scherencharakteristik gleich der des optimalen Sitzes ist.

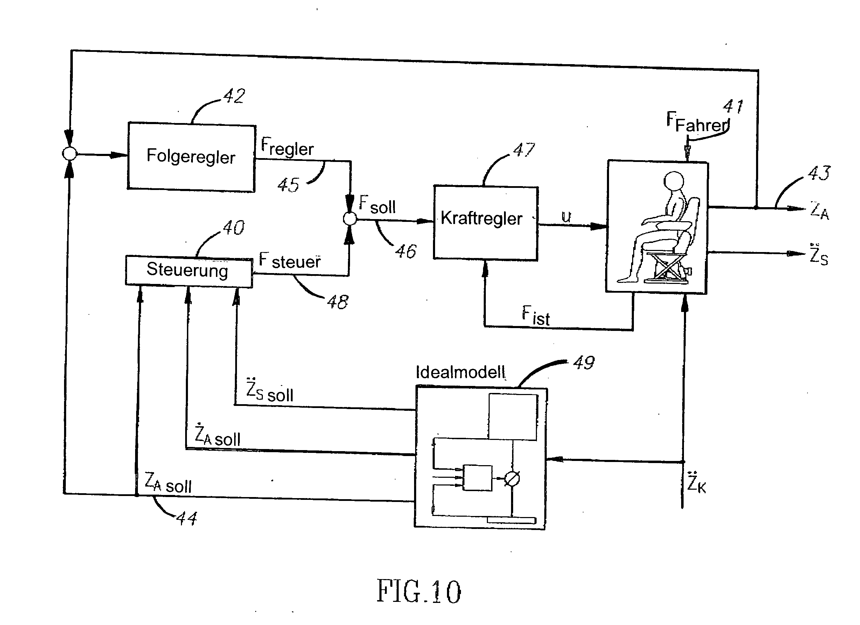

Neben der Steuerung mittels einer Steuerungseinheit 40, wie in Fig. 10 in einer schematischen Darstellung des Gesamtaufbaus des erfindungsgemäßen gefederten Fahrzeugsitzes wiedergegeben, ist aufgrund von Modellunsicherheiten und zur Kompensation der durch den Fahrer, zum Beispiel bei Pedalbetätigung ausgeübten Kräfte $F_{Fahrer}$ mit dem Bezugzeichen 41 eine Folgeregelung mittels einer Regelungseinheit 42 erforderlich, der die reale Sitzauslenkung $z_A$ gemäß Bezugzeichen 43 ihrem Sollwert $z_{Asoll}$ gemäß Bezugzeichen 44 durch einen weiteren Kraftanteil $F_{regler}$ gemäß Bezugzeichen 45 nachführt. Somit ergibt sich als Sollkraft 46 des Stellgliedes 47

$$F_{Soll} = F_{Steuer} + F_{regler}.$$ (9)

Dies beinhaltet demzufolge auch die Kraft der Steuerung $F_{Steuer}$ gemäß Bezugzeichen 48.

Ein wesentlicher Vorteil dieses aktiven Regelungskonzeptes gemäß vorliegender Erfindung wird in Fig. 10 nochmals dadurch verdeutlicht, dass, da die Sitzauslenkung stets der zur idealen Beschleunigung gehörenden Sollposition nachgeregelt wird, der Folgeregelkreis sehr schnell ausgelegt und somit zum Beispiel die Ausweichbewegung bei Pedalbetätigung sehr klein gehalten werden kann. Der Fahrer hat also das Gefühl, sehr definiert zu sitzen, ohne das dies eine schlechtere Schwingungsisolation und somit SEAT-Werte zur Folge hat.

Da in der Steuerung die wesentlichen nicht linearen Elemente des Sitzes berücksichtigt und im Idealfall kompensiert sind, kann zum Entwurf des Folgeregelns gemäß der Regelungseinheit 42 ein einfaches linearisiertes Ersatzmodell des Sitzes unter Bezugnahme auf Fig. 9 herangezogen werden:

$$G_{Strecke}(s) = \frac{Z_{A_{modell}}(s)}{F_{Soll}(s)} = \frac{1}{\left(ms^2 + ds + c\right)} \frac{Z_{Aktor}(s)}{N_{Aktor}(s)} = \frac{Z(s)}{N(s)}.$$ (10)

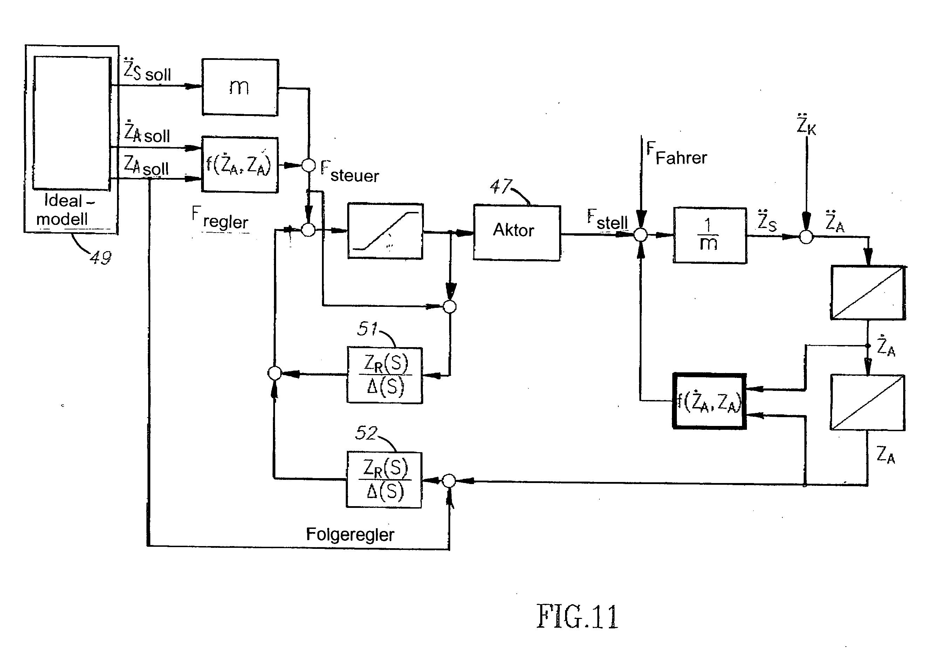

Als Regelungseinheit 42 wird ein im Frequenzbereich entworfener beobachterbasierter Zustandsregler mit Integralanteil verwendet, dessen Aufbau gemäß Fig. 11 in schematischer Weise dargestellt ist.

Zum Entwurf der Regelungseinheit 42 muss die Entwurfsgleichung

$$Z(s)Z_R(s) + N(s)Z_U(s) = \left(\tilde{N}(s) - N(s)\right)\Delta(s).$$ (11)

Nach den zu bestimmenden Reglerpolynomen $Z_R(s)$ und $Z_U(s)$ gelöst werden, wobei $\Delta(s)$ das charakteristische Polynom des Beobachters und $\tilde{N}(s)$ das charakteristische Polynom der geregelten Strecke darstellen und frei vorgegeben werden können, wenn der Grad von $\tilde{N}(s)$ und $\Delta(s)$ gleich dem Grad von $N(s)$ sind. Die gewählte Regler-/Beobachterstruktur vermeidet Regler-Windup bei Stellbegrenzung, wenn der darin enthaltene Begrenzer 51, 52 die Stellbegrenzung des Aktors 47 nachbildet.

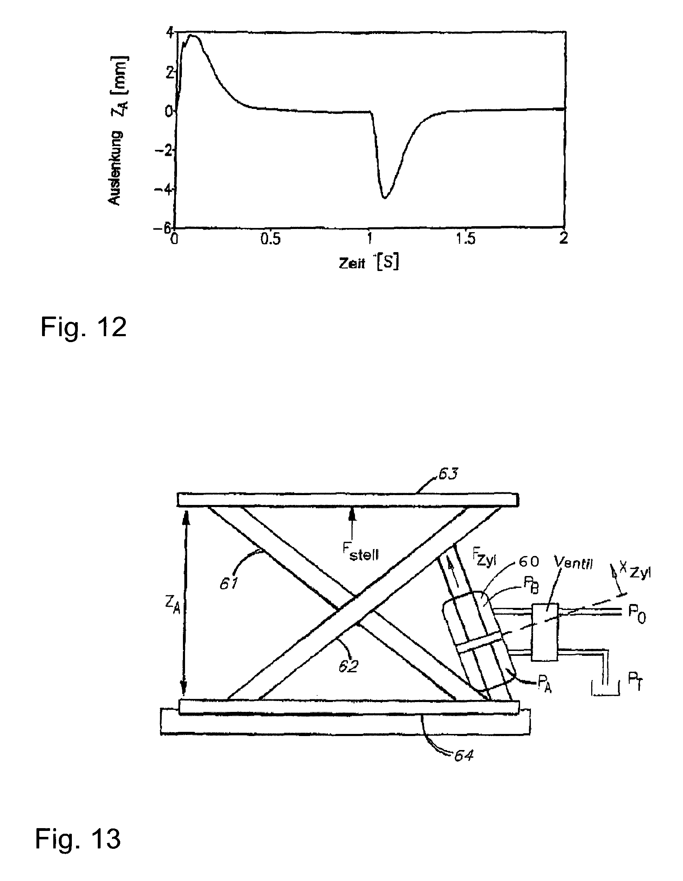

Wie bereits erwähnt, ermöglicht ein derartiges Federungsverfahren gemäß vorliegender Erfindung neben einer guten Schwingungsisolation auch eine gute Unterdrückung an Störkräften. Um dies zu verdeutlichen, zeigt Fig. 12 in einem Diagramm, in welchem die Auslenkung über die Ordinate und die Zeit über die Abszisse aufgetragen sind, die Reaktion des Sitzes auf ein plötzliches Aufstehen des Fahrers zu Beginn und ein plötzliches Setzen nach einer Sekunde. Bei gewählter Reglerparametrierung ergibt sich als maximale Auslenkung des Sitzes beim Aufstehen 4 mm und beim Setzen 4,5 mm. Demnach federt der geregelte aktive Sitz selbst bei dieser maximalen Störanregung weniger, als 10% seines verfügbaren Federweges, während ein passiver Sitz in den oberen Endanschlag der Federelemente fahren würde.

Für experimentelle Untersuchungen wird ein Hydraulikzylinder als Stellglied 60 gemäß Fig. 13 verwendet. Dieser ist in dem Scherengestell 61, 62 angeordnet, welches wiederum zwischen dem Sitzoberteil 63 und dem Sitzunterteil bzw. dem Kabinenelement 64 angeordnet ist. Die Einbaulage des Hydraulikzylinders und die Bezeichnung der verwendeten Größen zeigt Fig. 13 in einer schematischen Darstellung.

Zunächst wird ein Modell des verwendeten Gleichgangzylinders erstellt. Für die Kammerdrücke $p_A$ und $p_B$ ergibt sich

$$\frac{dp_A}{dt} = \frac{E_{oel}}{V_A}\left(-\left(K_L(p_A - p_B) + A_{\dot{x}_{Zyl}}\right) + Q_A\right)$$ (12)

und

$$\frac{dp_B}{dz} = \frac{E_{oel}}{V_B}\left(K_L(p_A - p_B) + A_{\dot{x}_{Zyl}} + Q_B\right)$$ (13)

wobei A die wirksame Kolbenfläche, $E_{oel}$ das Elastizitätsmodul des verwendeten Hydrauliköls, $K_L$ der Leckölbeiwert des Zylinders, $V_{A/B}$ fließen in die jeweiligen Zylinderkammern und können mit einem 4/3-Proportional-Wegeventil eingestellt werden. unter der Voraussetzung, dass die beiden Kammerdrücke kleiner als der Versorgungsdruck $P_0$ und größer als der Tankdruck $P_T$ sind, können die Ventildurchflüsse in Abhängigkeit der Ventilöffnung $x_V$ durch die Gleichungen

$$Q_A = B_V x_V \sqrt{\frac{1}{2}(P_0 - P_T) + sign(x_V)\left(\frac{1}{2}(P_0 + P_T) - p_A\right)}$$ (14)

und

$$Q_B = -B_V x_V \sqrt{\frac{1}{2}(P_0 - P_T) - sign(x_V)\left(\frac{1}{2}(P_0 + P_T) - p_B\right)}$$ (15)

beschrieben werden. aus den Gleichungen (8) und (9) lässt sich für den Differenzausdruck $p_\Delta = (p_A - P_B)$

$$\frac{dp_\Delta}{dt} = E_{oel}\left(-\left(\frac{1}{V_A} + \frac{1}{V_B}\right)\left(K_{Lp_\Delta} + A\dot{x}_{Zyl}\right) + \frac{Q_A}{V_A} - \frac{Q_B}{V_B}\right)$$ (16)

ableiten. Durch Einsetzen der Gleichungen (10) und (11) in Gleichung (12) erhält man eine neue Gleichung, die unter der Forderung

$$\frac{dp_\Delta}{dt} \overset{!}{=} \overline{u} \quad (17)$$

nach der Ventilöffnung aufgelöst werden kann. Verwendet man das sich ergebene Stellgesetz

$$x_V = \begin{cases} \dfrac{E_{oel}(V_A + V_B)(K_L p_\Delta + A\dot{x}_{Zyl}) + V_A V_B \overline{u}}{E_{oel} B_V \left(V_A \sqrt{p_B - P_T} + V_B \sqrt{P_0 - p_A}\right)} & \text{für Zähler} > 0 \\[3ex] \dfrac{E_{oel}(V_A + V_B)(K_L p_\Delta + A\dot{x}_{Zyl}) + V_A V_B \overline{u}}{E_{oel} B_V \left(V_A \sqrt{P_0 - p_B} + V_B \sqrt{p_A - P_{20}}\right)} & \text{für Zähler} < 0 \end{cases} \quad (18)$$

dann verhält sich der Differenzdruck des Zylinders bezüglich der neuen Eingangsgröße $\overline{u}$ linear und ist entkoppelt von der Zylinderbewegung.

Eigentlich interessant für die Anwendung im Sitz ist jedoch die Kraft

$$F_{Zyl} = Ap_\Delta - m_{Kolben} f_K \left(x_{Zyl}, \dot{x}_{Zyl}, \ddot{x}_{Zyl}, \dddot{x}_{Zyl}, \ddot{z}_K\right) - F_{\text{Reib}}\left(\dot{x}_{Zyl}\right), \quad (19)$$

die vom Zylinder auf das Scherengestell ausgeübt wird. Für den Einsatz zur aktiven Schwingungsdämpfung kann sowohl die Masse $m_{Kolben}$ des Zylinderkolbens als auch die Reibkraft $F_{Reib}$ vernachlässigt bzw. den passiven Elementen des Sitzes zugeschlagen werden. Dadurch erhält man mit dem Stellgesetz aus (14) auch ein linearisierendes Stellgesetz für die Zylinderkraft

$$\frac{dF_{Zyl}}{dt} = A\overline{u} \quad (20)$$

Aufgrund dieser Vereinfachungen sind hier anders als in [7] die nur schwer zu messenden Größen Zylinderbeschleunigung und -ruck nicht als Eingangsgrößen des linearisierenden Stellgesetzes erforderlich, was dessen Realisierung deutlich erleichtert.

Des Weiteren muss noch berücksichtigt werden, dass die Kraft $F_{Zyl}$ des Hydraulikzylinders nicht direkt auf das Sitzoberteil wirkt, sondern erst über die Scherenkinematik in eine vertikal wirkende Stellkraft umgerechnet werden muss.

$$F_{Stell}(t) = F_{Zyl}(t) umr_{ZK}\left(z_A(t)\right) \quad (21)$$

Fordert man nun, dass $\dfrac{d}{dt} F_{Stell}(t) = u(t)$ gilt, dann ergibt sich damit für die Eingangsgröße $\overline{u}$ des linearisierenden Stellgesetzes aus (14)

$$\overline{u}(t) = \frac{1}{A} \frac{dF_{Zyl}(t)}{dt} = \frac{1}{A} \frac{\left(u(t) - Ap_\Delta(t)\dfrac{dumr_{ZK}(z_A)}{dz_A}\dot{z}_A(t)\right)}{umr_{ZK}\left(z_A(t)\right)}. \quad (22)$$

Somit besteht also zwischen der neuen Eingangsgröße $u(t)$ und der Stellkraft $F_{Stell}(t)$ eine integrale Beziehung. Zur Stabilisierung des Systems wird noch eine Kraftregelung mit einem P-Regler überlagert, so dass sich insgesamt ein Aktor mit $PT_1$-Verhalten ergibt, der zudem von der Sitzbewegung entkoppelt ist.

Zur kostengünstigeren Realisierung der Kraftregelung soll auf einen Sensor zur Messung der Zylindergeschwindigkeit verzichtet werden. Diese Größe kann hierzu z.B. aus der gemessenen Zylinderlänge rekonstruiert werden. Die so ermittelte Geschwindigkeit verstärkt allerdings das Messrauschen oder weist eine große Phasenverschiebung auf. Deswegen werden hier die Sollausfederungsgeschwindigkeit des Sitzes und Sollgeschwindigkeit des Zylinders $\dot{x}_{Zyl\_soll}$ als Eingangsgröße der linearisierenden Stellgesetze (14) und (18) verwendet. letztere ergibt sich über die Beziehung

$$\frac{dF_{Stell}(t)}{dt} \cong u(t) + \frac{(V_A(t) + V_B(t))E_{oel}A^2 umr_{ZK^2}(z_A(t))}{V_A(t)V_B(t)}(\dot{z}_{Asoll}(t) - \dot{z}_A(t)) \qquad (23)$$

$$= u(t) + K(t)(\dot{z}_{Asoll}(t) - \dot{z}_A(t))$$

mit K(t)>0. Die Einspeisung der Sollgrößen in die Stellgesetze (14) und (18) wirkt also wie eine zusätzliche Aufschaltung der Abweichung zwischen Soll- und Ist-Ausfederungsgeschwindigkeit und hilft so bei der Führung des Sitzes entlang der Solltrajektorie.

Für die experimentellen Untersuchungen an einen Versuchsstand wird der im vorherigen Abschnitt beschriebene kraftgeregelte Gleichgangzylinder als Stellglied verwendet. Für die in Tabelle 3 aufgeführten Messergebnisse wurde die Zeitkonstante der Kraftregelung wie bei der Simulation im vorigen Abschnitt auf 70Hz eingestellt. Die Parametrierung des Folgereglers wurde übernommen.

Tabelle 3

| Anregungssignal | EWG Klasse II | | | EM3 | | | |
|---|---|---|---|---|---|---|---|
| Amplitudenskalierung | 50% | 100% | 150% | 100% | 130% | 150% | 180% |
| SEAT-Wert | 0,42 | 0,37 | 0,35 | 0,39 | 0,40 | 0,41 | 0,44 |
| Federweg [mm] | 28 | 60 | 84 | 85 | 90 | 93 | 96 |

Ein Vergleich der Simulationsergebnisse von Idealmodell und geregeltem Sitz mit linearem Stellglied mit Messergebnissen des aktiven Sitzes mit hydraulischem Stellglied und eines passiven Seriensitzes zeigt, dass während sich der Federwegbedarf der betrachteten aktiven Systeme und des Idealmodells deckt, die experimentell ermittelten SEAT-Werte deutlich über denen des Idealmodells liegen. Ein Grund hierfür ist, dass das verwendete Hydraulikventil relativ langsam, mindestens um den Faktor 5 zu groß dimensioniert und somit nicht an die Aufgabenstellung angepasst ist. Bei besserer Wahl sind daher niedrigere Werte zu erwarten.

Im Vergleich zum Seriensitz benötigen die aktiven Systeme bei allen betrachteten Anregungen einen kleineren Federweg. Das Idealmodell und das simulierte System weisen zudem stets einen kleineren SEAT-Wert auf. Insbesondere bei großen Anregungen ist der SEAT-Wert um annähernd 40% niedriger als der des Seriensitzes und gleichzeitig der Federwegbedarf um 30% reduziert. Außer bei einer Anregungsvariante (EWG2 100%) unterbietet auch der experimentell untersuchte Sitz den SEAT-Wert des Seriensitzes. Er erzielt bei deutlich reduziertem Federwegbedarf noch eine Verbesserung des SEAT-Wertes um bis zu 25%.

Das erfindungsgemäße Verfahren mit dazugehörigem Fahrzeug zum Entwurf einer aktiven Schwingungsisolation für Fahrzeugsitze bietet die Möglichkeit die Reaktion des Sitzes auf Kabinenbewegung und andere Störungen getrennt voneinander einzustellen.

Aufgrund des modularen Aufbaus der Regelung muss bei einem Einsatz des aktiv gefederten Sitzes auf einem anderen Fahrzeugtyp lediglich das Idealmodell angepasst werden. bei Änderung des Sitzaufbaus oder der Aktorik sind nur Steuerung und Folgeregler anzupassen.

Sowohl Simulationsergebnisse als auch Messungen am Versuchsstand belegen die prinzipielle Tragfähigkeit des Konzeptes und die Vorzüge der aktiver Sitzfederungen gegenüber passiven Federungsvarianten.

**Bezugszeichenliste**

| | |
|---|---|
| 1 | Fahrzeugsitz |
| 3 | Polster |
| 4, 5 | Scherengestell |
| 6 | Untergestell |
| 7 | Dämpfer |
| 8 | Luftfeder |

| 10 | Sitz |
|---|---|
| 11 | Störgrößenaufschaltung |
| 12, 13 | Positionsregler in der Mittellage als Sollwert |
| 20 | Kraft |
| 21 | Sitzoberteil |
| 22 | Kabine |
| 23, 24 | Feder- und Dämpferlemente |
| 30 | Masse |
| 31 | mechanische Kopplung |
| 32 | Feder- und Dämpferelement |
| 40 | Steuerungseinheit |
| 41 | ausgeübte Kräfte |
| 42 | Regelungseinheit |
| 43 | reale Sitzauslenkung |
| 44 | Sollwert |
| 45 | weiterer Kraftanteil |
| 46 | Aktor |
| 47, 60 | Stellglied |
| 48 | Kraft der Steuerung |
| 51, 52 | Begrenzer |
| 61, 62 | Scherengestell |
| 63 | Sitzoberteil |
| 64 | Kabinenelement |

**Patentansprüche**

1. Verfahren zur Federung eines Fahrzeugteiles in einem Fahrzeug mit einem gegenüber einem ersten Fahrzeugteil (22) schwingend bewegbaren zweiten Fahrzeugteil (21) und einer ersten Messeinrichtung zum Messen mindestens eines realen Beschleunigungsmesswertes des ersten Fahrzeugteiles (22) in Bezug auf eine Fahrbahn, bei welchem ein realer Beschleunigungswert des zweiten Fahrzeugteiles (21) unter Ausnutzung mindestens eines zur Verfügung stehenden Federweges mit Hilfe mindestens eines zwischen dem ersten Fahrzeugteil (22) und dem zweiten Fahrzeugteil (21) angeordneten Stellglieds (9, 47, 60) reduziert wird,
**dadurch gekennzeichnet, dass**
ein optimaler Beschleunigungswert des zweiten Fahrzeugteiles (21) aus dem realen Beschleunigungsmesswert des ersten Fahrzeugteiles (22) ermittelt wird, und bei welchem anschließend mit Steuerungs- und Regelungseinheiten (40, 42) des Stellglieds (9, 47, 60) eine Abweichung eines realen Beschleunigungswertes des zweiten Fahrzeugteiles (21) vom optimalen Beschleunigungswert des zweiten Fahrzeugteiles (21) unter Ausnutzung des mindestens einen zur Verfügung stehenden Federweges minimiert wird, wobei die Berechnungseinrichtung eine Idealtrajektorie für das Federschwingungsverhalten des zweiten Fahrzeugteiles (21) zur Herbeiführung einer Minimierung seines realen Beschleunigungswertes bestimmt, wobei in der Berechnungseinrichtung aus dem optimalen Beschleunigungswert $\ddot{z}_{Ssoll}$ des zweiten Fahrzeugteiles (21) eine optimale Auslenkung $z_{A\,soll}$ und die optimale Geschwindigkeit $\dot{z}_{Asoll}$ des zweiten Fahrzeugteiles (21) gegenüber der Fahrbahn ermittelt wird und als Steuerungskraftsignal mittels der Steuerungseinheit (40) dem Stellglied (9, 47, 60) zugeleitet wird, und wobei der reale Beschleunigungswert des zweiten Fahrzeuteiles (21) dem idealen Beschleunigungswert, welcher der Idealtrajektorie folgt, nachgeregelt wird.

2. Verfahren nach Anspruch 1,
**dadurch gekennzeichnet, dass**
die Regelungseinheit (42) eine reale Auslenkung $z_A$ der optimalen Auslenkung $z_{A\,soll}$ des zweiten Fahrzeugteiles (21) durch Ausgabe eines Regelungskraftsignales an das Stellglied (9, 47, 60) angleicht.

3. Verfahren nach Anspruch 1 - 2,
**dadurch gekennzeichnet, dass**
eine Auslenkung des zweiten Fahrzeugteiles (21) auf eine in Abhängigkeit von dem optimalen Beschleunigungswert zugehörigen Sollwert eingeregelt wird.

4. Verfahren nach einem der Ansprüche 1 - 3

**dadurch gekennzeichnet, dass**

die optimalen Werte einer Fahrsituation des Fahrzeuges angepasst werden.

5. Fahrzeug zum Durchführen des Verfahrens nach einem der Ansprüche 1 bis 4 mit einem gegenüber einem ersten Fahrzeugteil (22) schwingend bewegbaren zweiten Fahrzeugteil (21) und mit einer ersten Messeinrichtung zum Messen mindestens eines realen Beschleunigungsmesswertes des ersten Fahrzeugteiles (22) in Bezug auf eine Fahrbahn und mit einem zwischen dem ersten Fahrzeugteil (22) und dem zweiten Fahrzeugteil (21) angeordneten Stellglied (9, 47, 60),

**gekennzeichnet durch**

eine Berechnungseinrichtung zum Bestimmen eines zum Zeitpunkt des Vorliegens des realen Beschleunigungsmesswertes des ersten Fahrzeugteils (22) anzuwendenden optimalen Beschleunigungswertes des zweiten Fahrzeugteiles (21), wobei das Stellglied (9, 47, 60) Steuerungs- und Regelungseinheiten (40, 42) zum Minimieren einer Abweichung eines realen Beschleunigungswertes des zweiten Fahrzeugteiles (21) vom optimalen Beschleunigungswert des zweiten Fahrzeugteiles (21) unter Ausnutzung mindestens eines zur Verfügung stehenden Federweges aufweist, wobei die Berechnungseinrichtung zum Bestimmen einer Idealtrajektorie für das Federschwingungsverhalten des zweiten Fahrzeugteiles (21) zur Herbeiführung einer Minimierung seines realen Beschleunigungswertes geeignet ist, wobei in der Berechnungseinrichtung aus dem optimalen Beschleunigungswert $\ddot{z}_{Ssoll}$ des zweiten Fahrzeugteiles (21) eine optimale Auslenkung $z_{Asoll}$ und die optimale Geschwindigkeit $\dot{z}_{Asoll}$ des zweiten Fahrzeugteiles (21) gegenüber dem ersten Fahrzeugteil (22) ermittelbar ist und als Steuerungskraftsignal mittels der Steuerungseinheit (40) dem Stellglied (9, 47, 60) zuleitbar ist, und wobei der reale Beschleunigungswert des zweiten Fahrzeuteiles (21) dem idealen Beschleunigungswert, welcher der Idealtrajektorie folgt, nachregelbar ist.

6. Fahrzeug nach Anspruch 5,
**dadurch gekennzeichnet, dass**
das erste Fahrzeugteil (22) ein Fahrzeugkabinenboden und das zweite Fahrzeugteil (21) ein Fahrzeugsitzteil ist.

7. Fahrzeug nach Anspruch 5 oder 6,
**dadurch gekennzeichnet, dass**
zwischen der Berechnungseinrichtung und dem Stellglied (9, 47, 60) die Regelungseinheit (42) angeordnet ist, um eine reale Auslenkung $z_A$ der optimalen Auslenkung $z_{Asoll}$ des zweiten Fahrzeugteiles (22) durch Ausgabe eines Regelungskraftsignals an das Stellglied anzugleichen.

8. Fahrzeug nach Anspruch 5 bis 7,
**dadurch gekennzeichnet, dass**
eine Summe einer Regelungskraft der Regelungseinheit (42) und einer Steuerungskraft der Steuerungseinheit (40) eine aufzuwendende Sollkraft des Stellgliedes (9, 47, 60) ergibt.

**Claims**

1. Method for the suspension of a vehicle part in a vehicle, said part comprising a second vehicle part (21) which can oscillate relative to a first vehicle part (22), and a first measurement device for measuring at least one actual acceleration measured value for the first vehicle part (22) in relation to a road, in which an actual acceleration value for the second vehicle part (21) is reduced with the aid of at least one actuator (9, 47, 60) arranged between the first vehicle part (22) and the second vehicle part (21) by using at least one available suspension travel,
**characterised in that**
an optimum acceleration value for the second vehicle part (21) is determined from the actual acceleration measured value for the first vehicle part (22), and in which open-loop and closed-loop control units (40, 42) of the actuator (9, 47, 60) then minimise the extent to which an actual acceleration value for the second vehicle part (21) deviates from the optimum acceleration value for the second vehicle part (21) by using the at least one available suspension travel, the calculation device determining an ideal trajectory for the suspension oscillation behaviour of the second vehicle part (21) for the purpose of minimising the actual acceleration value thereof, an optimum deflection $z_{A\,Soll}$ and the optimum speed $\dot{z}_{Asoll}$ of the second vehicle part (21) being determined in relation to the road in the calculation device from the optimum acceleration value $\ddot{z}_{Ssoll}$ for the second vehicle part (21) and being forwarded to the actuator (9, 47, 60) as an open-loop control force signal by means of the open-loop control unit (40), and the actual acceleration value for the second vehicle part (21) being readjusted to the ideal acceleration value which follows the ideal trajectory.

**2.** Method according to claim 1, **characterised in that** the closed-loop control unit (42) adjusts an actual deflection $z_A$ to match the optimum deflection $z_{A\,soll}$ of the second vehicle part (21) by outputting a closed-loop control force signal to the actuator (9, 47, 60).

**3.** Method according to either claim 1 or claim 2, **characterised in that** a deflection of the second vehicle part (21) is set to a target value which is assigned thereto depending on the optimum acceleration value.

**4.** Method according to any of claims 1 to 3, **characterised in that** the optimum values are adapted to a vehicle driving situation.

**5.** Vehicle for carrying out the method according to any of claims 1 to 4, comprising a second vehicle part (21) which can oscillate relative to a first vehicle part (22), and a first measurement device for measuring at least one actual acceleration measured value for the first vehicle part (22) in relation to a road, and an actuator (9, 47, 60) arranged between the first vehicle part (22) and the second vehicle part (21),
**characterised by**
a calculation device for determining an optimum acceleration value for the second vehicle part (21) to be used when the actual acceleration measured value of the first vehicle part (22) is available, the actuator (9, 47, 60) comprising open-loop and closed-loop control units (40, 42) for minimising the extent to which an actual acceleration value for the second vehicle part (21) deviates from the optimum acceleration value for the second vehicle part (21) by using at least one available suspension travel, the calculation device being suitable for determining an ideal trajectory for the suspension oscillation behaviour of the second vehicle part (21) for the purpose of minimising the actual acceleration value thereof, it being possible to determine, in the calculation device, an optimum deflection $z_{Asoll}$ and the optimum speed $\dot{z}_{Asoll}$ of the second vehicle part (21) relative to the first vehicle part (22) from the optimum acceleration value $\dot{z}_{Ssoll}$ of the second vehicle part (21) and for these to be forwarded to the actuator (9, 47, 60) as an open-loop control force signal by means of the open-loop control unit (40), and the actual acceleration value of the second vehicle part (21) being readjusted to the ideal acceleration value which follows the ideal trajectory.

**6.** Vehicle according to claim 5, **characterised in that** the first vehicle part (22) is a floor of the vehicle interior and the second vehicle part (21) is a vehicle seat part.

**7.** Vehicle according to either claim 5 or claim 6, **characterised in that** the closed-loop control unit (42) is arranged between the calculation device and the actuator (9, 47, 60) in order to adjust an actual deflection $z_A$ of the optimum deflection $z_{Asoll}$ of the second vehicle part (22) by outputting a closed-loop control force signal to the actuator.

**8.** Vehicle according to claims 5 to 7, **characterised in that** the sum of a closed-loop control force of the closed-loop control unit (42) and an open-loop control force of the open-loop control unit (40) is a target force to be exerted by the actuator (9, 47, 60).

**Revendications**

**1.** Procédé destiné à la suspension d'un élément de véhicule dans un véhicule avec un deuxième élément de véhicule (21) mobile en oscillation vis-à-vis d'un premier élément de véhicule (22) et avec un premier dispositif de mesure pour la mesure d'au moins une valeur de mesure d'accélération réelle du premier élément de véhicule (22) par rapport à une chaussée, dans lequel une valeur d'accélération réelle du deuxième élément de véhicule (21) est réduite en utilisant au moins une course de ressort disponible à l'aide d'au moins un actionneur (9, 47, 60) disposé entre le premier élément de véhicule (22) et le deuxième élément de véhicule (21),
**caractérisé en ce**
**qu'**une valeur d'accélération optimale du deuxième élément de véhicule (21) est déterminée à partir de la valeur de mesure d'accélération réelle du premier élément de véhicule (22), et dans lequel un écart d'une valeur d'accélération réelle du deuxième élément de véhicule (21) à la valeur d'accélération optimale du deuxième élément de véhicule (21) est ensuite, avec des unités de commande et de régulation (40, 42) de l'actionneur (9, 47, 60), minimisé en utilisant la au moins une course de ressort disponible, dans lequel le dispositif de calcul définit une trajectoire idéale pour le comportement d'oscillation de ressort du deuxième élément de véhicule (21) en vue de susciter une minimisation de sa valeur d'accélération réelle, dans lequel, dans le dispositif de calcul, à partir de la valeur d'accélération optimale $\ddot{z}_{Ssoll}$ du deuxième élément de véhicule (21), une déviation optimale $z_{A\,soll}$ et la vitesse optimale $\dot{z}_{Asoll}$ du deuxième élément de véhicule (21) par rapport à la chaussée sont déterminées et sont conduites à l'actionneur (9, 47, 60) en tant que signaux de force de commande au moyen de l'unité de commande (40), et dans lequel la valeur d'accélération réelle du deuxième élément de véhicule (21) est réajustée sur la valeur d'accélération idéale qui suit la trajectoire idéale.

2. Procédé selon la revendication 1,
   **caractérisé en ce que**
   l'unité de régulation (42) harmonise une déviation réelle $Z_A$ avec la déviation optimale $z_{A\,soll}$ du deuxième élément de véhicule (21) par la délivrance d'un signal de force de régulation à l'actionneur (9, 47, 60).

3. Procédé selon les revendications 1 et 2,
   **caractérisé en ce**
   **qu'**une déviation du deuxième élément de véhicule (21) est réglée sur une valeur de consigne correspondante en fonction de la valeur d'accélération optimale.

4. Procédé selon l'une des revendication 1 à 3,
   **caractérisé en ce que**
   les valeurs optimales sont adaptées à une situation de conduite du véhicule.

5. Véhicule destiné à la réalisation du procédé selon l'une des revendications 1 à 4 avec un avec un deuxième élément de véhicule (21) mobile en oscillation vis-à-vis d'un premier élément de véhicule (22) et avec un premier dispositif de mesure pour la mesure d'au moins une valeur de mesure d'accélération réelle du premier élément de véhicule (22) par rapport à une chaussée et avec un actionneur (9, 47, 60) disposé entre le premier élément de véhicule (22) et le deuxième élément de véhicule (21), **caractérisé par** un dispositif de calcul destiné à la définition d'une valeur d'accélération optimale du deuxième élément de véhicule (21) à utiliser au moment de la présence de la valeur de mesure d'accélération réelle du premier élément de véhicule (22), dans lequel l'actionneur (9, 47, 60) présente des unités de commande et de régulation (40, 42) destinées à minimiser un écart d'une valeur d'accélération réelle du deuxième élément de véhicule (21) par rapport à la valeur d'accélération optimale du deuxième élément de véhicule (21) en utilisant au moins une course de ressort disponible, dans lequel le dispositif de calcul est approprié pour la définition d'une trajectoire idéale pour le comportement d'oscillation de ressort du deuxième élément de véhicule (21) afin de susciter une minimisation de sa valeur d'accélération réelle, dans lequel, dans le dispositif de calcul, à partir de la valeur d'accélération optimale $\ddot{z}_{Ssoll}$ du deuxième élément de véhicule (21), une déviation optimale $z_{Asoll}$ et la vitesse optimale $\dot{z}_{Asoll}$ du deuxième élément de véhicule (21) par rapport au premier élément de véhicule (22) peuvent être déterminées et peuvent être conduites à l'actionneur (9, 47, 60) en tant que signaux de force de commande au moyen de l'unité de commande (40), et dans lequel la valeur d'accélération réelle du deuxième élément de véhicule (21) est réajustée sur la valeur d'accélération idéale qui suit la trajectoire idéale.

6. Véhicule selon la revendication 5,
   **caractérisé en ce que**
   le premier élément de véhicule (22) est un plancher de cabine de véhicule et le deuxième élément de véhicule (21) une partie d'assise de siège de véhicule.

7. Véhicule selon la revendication 5 ou 6,
   **caractérisé en ce que**
   l'unité de régulation (42) est disposée entre le dispositif de calcul et l'actionneur (9, 47, 60) pour harmoniser une déviation réelle $z_A$ avec la déviation optimale $Z_{Asoll}$ du deuxième élément de véhicule (22) par la délivrance d'un signal de force de régulation à l'actionneur.

8. Véhicule selon les revendications 5 à 7,
   **caractérisé en ce**
   **qu'**une somme d'une force de régulation de l'unité de régulation (42) et d'une force de commande de l'unité de commande (40) donne une force de consigne de l'actionneur (9, 47, 60) à mettre en oeuvre.

**FIG.1**

FIG.2

FIG.3

FIG.4

FIG.5

FIG.6

FIG.7

FIG.8

FIG.9

FIG.10

FIG.11

Fig. 12

Fig. 13

**EP 2 067 656 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2004089488 A1
- EP 1577156 A2
- GB 2313214 A
- JP 9109757 A
- US 2004024503 A1